# EUROPEAN PATENT APPLICATION

(11) **EP 4 773 426 A1**
(43) Date of publication of application: **08.07.2026**
(21) Application number: 25867226.0
(22) Date of filing: 30.10.2025
(51) Int. Cl.: H01M 50/588, H01M 50/262

(54) **BATTERY PACK**

(30) Priority: 06.11.2024 KR 20240155889
(71) Applicant: LG ENERGY SOLUTION, LTD., Seoul 07335 (KR)
(72) Inventor: PARK, Ju Hun, Daejeon 34122 (KR); CHOI, Beom Seok, Daejeon 34122 (KR)
(74) Representative: Plasseraud IP
(86) International application number: PCT/KR2025/017576
(87) International publication number: WO 2026/101111

(57) **Abstract**

The technical concept of the present disclosure provides a battery pack including: a pack housing; a cell assembly including a frame provided on the pack housing and battery cells accommodated in the frame; a mounting block provided between the frame and the pack housing; and a first bolt fastening the frame to the mounting block and spaced apart from the pack housing, wherein the mounting block includes an insulation layer provided at a portion in contact with the frame and a portion in contact with the pack housing.

## Description

### [Technical field]

The present disclosure relates to a battery pack.

This application claims the benefit of Korean Patent Application No. 10-2024-0155889, filed on November 6, 2024, the entire contents of which are incorporated herein by reference.

### [Background]

Unlike primary batteries, secondary batteries are capable of a plurality of charge-discharge cycles. Secondary batteries are widely used as energy sources for various wireless devices such as handsets, laptops, and cordless vacuum cleaners. Recently, due to improvements in energy density and economies of scale, the manufacturing cost per unit capacity of secondary batteries has dramatically decreased, and the driving range of BEVs (Battery Electric Vehicles) has increased to a level comparable to that of internal combustion engine vehicles. Accordingly, the primary application of secondary batteries is shifting from mobile devices to mobility.

As secondary batteries are increasingly used in mobility applications, the demand for safety of secondary batteries is growing. In the event of an incident such as a fire in a secondary battery used in a mobility application, it may endanger the life of the driver. Therefore, research on technologies to enhance the safety of secondary batteries is indispensable.

### [Summary]

### [Technical Problem]

The technical problem to be solved by the technical concept of the present disclosure is to provide a battery pack.

### [Technical Solution]

In order to solve the above-described problem, the technical concept of the present disclosure provides a battery pack including: a pack housing; a cell assembly including a frame provided on the pack housing and battery cells accommodated in the frame; a mounting block provided between the frame and the pack housing; and a first bolt fastening the frame to the mounting block and spaced apart from the pack housing, wherein the mounting block includes an insulation layer provided at a portion in contact with the frame and a portion in contact with the pack housing.

In exemplary aspects, the mounting block further includes a core block, and the insulation layer extends along an outer surface of the core block.

In exemplary aspects, the first bolt is fastened to the core block.

In exemplary aspects, the insulation layer is configured to electrically insulate the pack housing from the frame and the first bolt.

In exemplary aspects, the battery pack further includes a second bolt fastening the mounting block to the pack housing.

In exemplary aspects, the mounting block further includes a core block to which the first bolt is fastened, and the second bolt is spaced apart from the core block with the insulation layer interposed therebetween.

In exemplary aspects, the mounting block further includes a core block to which the first bolt is fastened, and the insulation layer includes: an outer insulation layer extending along an outer surface of the core block and in contact with the frame and the pack housing; and an inner insulation layer extending along a hole of the core block into which the second bolt is inserted.

In exemplary aspects, the insulation layer is configured to electrically insulate the second bolt from the core block and the first bolt.

In exemplary aspects, the mounting block includes a hollow part, and an end of the first bolt is accommodated in the hollow part of the mounting block.

In exemplary aspects, the battery pack further includes a nut coupled to the end of the first bolt accommodated in the hollow part of the mounting block.

In exemplary aspects, a second bolt fastening the mounting block to the pack housing, wherein a part of the second bolt is accommodated in the hollow part of the mounting block.

In exemplary aspects, the mounting block includes a hollow part accommodating an end of the first bolt, and the battery pack further includes: a nut coupled to the end of the first bolt accommodated in the hollow part of the mounting block; and a second bolt fastening the mounting block to the pack housing and having a portion accommodated in the hollow part of the mounting block.

### [Advantageous Effects]

According to the exemplary aspects, since the electrical insulation between the pack housing and the frame of the cell assembly can be maintained by the insulation layer of the mounting block, the occurrence of electrical short circuits and arcing caused by the electrical connection of the frame of the cell assembly to the pack housing can be suppressed. Since heat propagation between cell assemblies and simultaneous thermal runaway of cell assemblies, which are caused by the electrical short circuits and arcing between the frame of the cell assembly and the pack housing, can be suppressed, the safety and reliability of the battery pack can be improved.

The effects that can be obtained from the exemplary aspects of the present disclosure are not limited to the effects mentioned above, and other effects not mentioned can be clearly derived and understood by a person having ordinary knowledge in the technical field to which the exemplary aspects of the present disclosure belong from the following description. In other words, unintended effects of practicing the exemplary aspects of the present disclosure can also be derived from the exemplary aspects of the present disclosure by a person having ordinary knowledge in the technical field.

### [Brief Description of the Drawings]

FIG. 1 is a plan view illustrating a battery pack according to exemplary aspects.
FIG. 2 is a perspective view illustrating a state in which a cell assembly provided in a battery pack according to exemplary aspects is mounted on a pack housing.
FIG. 3 is a side view illustrating a state in which a cell assembly provided in a battery pack according to exemplary aspects is mounted on a pack housing.
FIG. 4 is a cross-sectional view illustrating a state in which a cell assembly provided in a battery pack according to exemplary aspects is mounted on a pack housing.
FIG. 5 is a cross-sectional view illustrating a state in which a cell assembly provided in a battery pack according to exemplary aspects is mounted on a pack housing.
FIG. 6 is a cross-sectional view illustrating a state in which a cell assembly provided in a battery pack according to exemplary aspects is mounted on a pack housing.

### [Best Mode for Carrying out the Invention]

Hereinafter, preferred aspects of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the aspects described herein and the configurations shown in the drawings are only the most preferred aspects of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the aspects of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

### (First aspect)

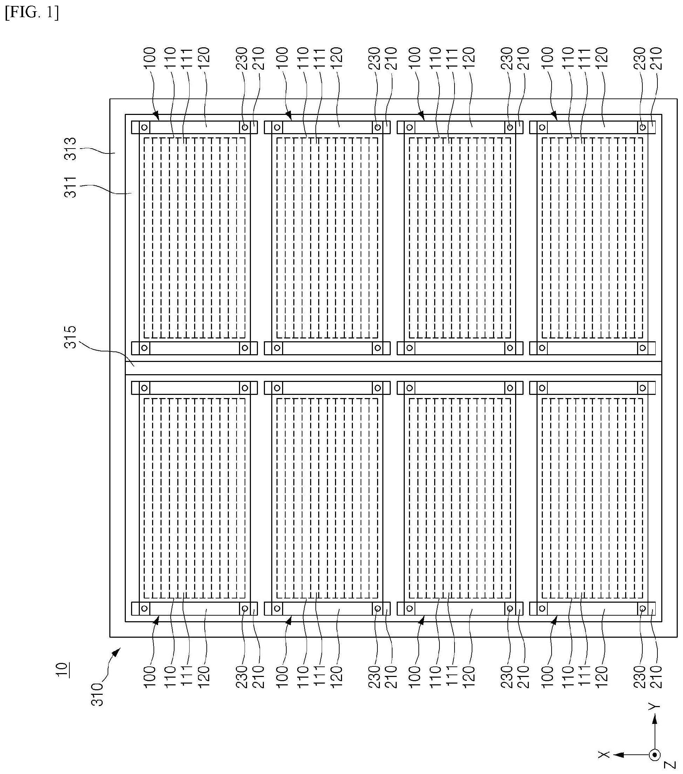

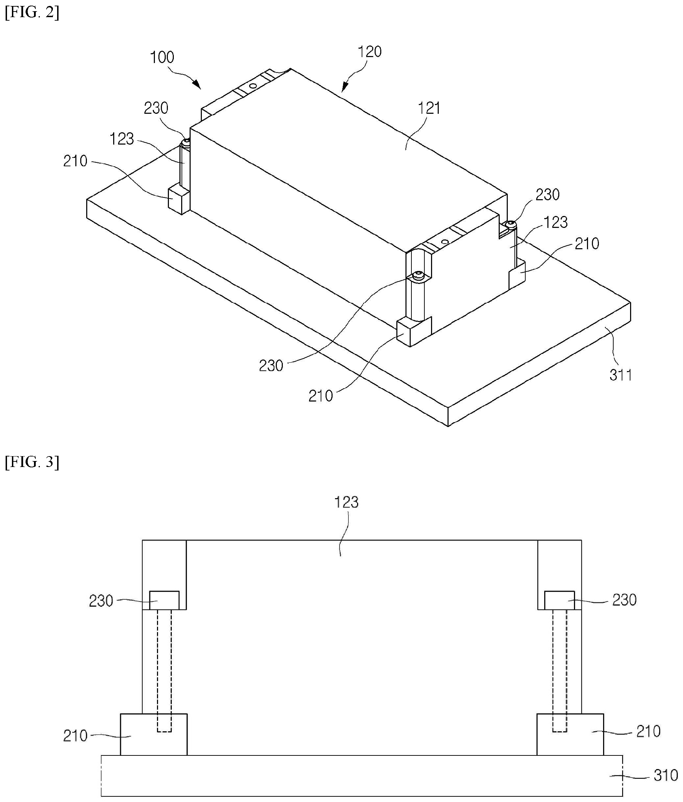

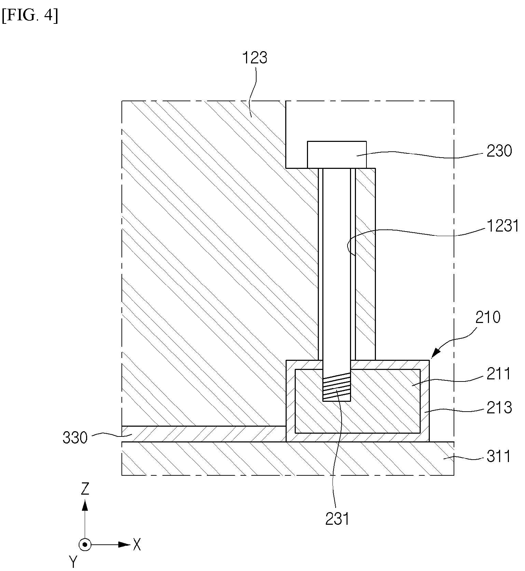

FIG. 1 is a plan view illustrating a battery pack 10 according to exemplary aspects. FIG. 2 is a perspective view illustrating a state in which a cell assembly 100 provided in the battery pack 10 according to exemplary aspects is mounted on a pack housing 310. FIG. 3 is a side view illustrating a state in which the cell assembly 100 provided in the battery pack 10 according to exemplary aspects is mounted on the pack housing 310. FIG. 4 is a cross-sectional view illustrating a state in which the cell assembly 100 provided in the battery pack 10 according to exemplary aspects is mounted on the pack housing 310.

Referring to FIGS. 1 to 4, the battery pack 10 may include a cell assembly 100, a pack housing 310, a mounting block 210, and a first bolt 230.

The cell assembly 100 may be mounted on the pack housing 310. A plurality of cell assemblies 100 may be provided on the pack housing 310, and the plurality of cell assemblies 100 may be arranged in a first horizontal direction (e.g., the X-axis direction) and a second horizontal direction (e.g., the Y-axis direction).

The cell assembly 100 may include a cell block 110 including a plurality of battery cells 111, and a frame 120.

Each battery cell 111 is a basic unit of a lithium-ion battery, that is, a secondary battery. Each battery cell 111 may include an electrode assembly, an electrolyte, and a cell case. The electrode assembly enclosed in the cell case may include a positive electrode, a negative electrode, and a separator interposed between the positive electrode and the negative electrode. The electrode assembly may be either a jelly-roll type or a stack-type depending on the assembly configuration. A jelly-roll type electrode assembly may include a wound structure of a positive electrode, a negative electrode, and a separator interposed therebetween. A stack-type electrode assembly may include a plurality of positive electrodes, a plurality of negative electrodes, and a plurality of separators interposed therebetween, which are sequentially stacked. The positive electrode may include a positive electrode current collector and a positive electrode active material. The negative electrode may include a negative electrode current collector and a negative electrode active material.

Each battery cell 111 may correspond to a pouch-type battery cell, a cylindrical battery cell, or a prismatic battery cell. The electrode assembly of a pouch-type battery cell is enclosed in a pouch case including an aluminum laminate sheet. The electrode assembly of a cylindrical battery cell is enclosed in a cylindrical metal can. The electrode assembly of a prismatic battery cell is enclosed in a prismatic metal can.

The plurality of battery cells 111 provided in the cell block 110 may be connected in series and/or in parallel. In one example, the plurality of battery cells 111 may be connected to each other in series. In one example, the plurality of battery cells 111 may be connected to each other in parallel. In one example, when defining a set of two or more battery cells 111 connected in parallel as a bank, one bank consisting of two or more battery cells 111 connected in parallel may be connected in series with another bank consisting of two or more battery cells 111 connected in parallel.

In exemplary aspects, the plurality of battery cells 111 may be arranged in the first horizontal direction (e.g., the X-axis direction), and each battery cell 111 may extend in the second horizontal direction (e.g., the Y-axis direction). An electrode lead may be provided at at least one of both ends of each battery cell 111 in the second horizontal direction (e.g., the Y-axis direction). The electrode leads of adjacent battery cells 111 among the plurality of battery cells 111 may be electrically and physically connected to each other.

The cell block 110 may include a first side surface and a second side surface opposite in the first horizontal direction (e.g., the X-axis direction), a front surface and a rear surface opposite in the second horizontal direction (e.g., the Y-axis direction), and a bottom surface and an upper surface opposite in the vertical direction (e.g., the Z-axis direction). The front surface of the cell block 110 may include the front surfaces of the plurality of battery cells 111, and the rear surface of the cell block 110 may include the rear surfaces of the plurality of battery cells 111. The bottom surface of the cell block 110 may include the bottom surfaces of the plurality of battery cells 111, and the upper surface of the cell block 110 may include the upper surfaces of the plurality of battery cells 111.

The frame 120 may accommodate the cell block 110. The frame 120 may include a center frame 121 and a pair of end frames 123. The center frame 121 may surround the cell block 110 so as to cover the bottom surface, the upper surface, the first side surface, and the second side surface of the cell block 110. The pair of end frames 123 may be spaced apart from each other in the second horizontal direction (e.g., the Y-axis direction) with the cell block 110 interposed therebetween. One of the pair of end frames 123 may be coupled to the center frame 121 so as to cover the front surface of the cell block 110, and the other one of the pair of end frames 123 may be coupled to the center frame 121 so as to cover the rear surface of the cell block 110.

The pack housing 310 may provide an internal space for accommodating the plurality of cell assemblies 100. The pack housing 310 may include a base plate 311 and a peripheral wall 313.

The base plate 311 may support the plurality of cell assemblies 100. The base plate 311 may have a flat plate shape extending in the first horizontal direction (e.g., the X-axis direction) and the second horizontal direction (e.g., the Y-axis direction), which are perpendicular to each other. The frame 120 of each cell assembly 100 may be attached to the base plate 311 by an adhesive layer 330. For example, the adhesive layer 330 may include a thermal interface material (TIM).

The peripheral wall 313 may be coupled to the periphery of the base plate 311. The peripheral wall 313 may continuously extend along the periphery of the base plate 311 so as to surround the plurality of cell assemblies 100.

The pack housing 310 may further include a center beam 315. The center beam 315 may be disposed on the base plate 311 and may extend in the first horizontal direction (e.g., the X-axis direction). Some of the plurality of cell assemblies 100 may be spaced apart from each other in the second horizontal direction (e.g., the Y-axis direction) with the center beam 315 interposed therebetween.

The mounting block 210 may be provided between the frame 120 of the cell assembly 100 and the pack housing 310. The mounting block 210 may be utilized for fastening between the frame 120 of the cell assembly 100 and the pack housing 310. The mounting block 210 may be coupled to the base plate 311 of the pack housing 310, and the frame 120 of the cell assembly 100 may be seated on the mounting block 210. The mounting block 210 may be bolt-fastened to the base plate 311 of the pack housing 310 or may be attached to the base plate 311 of the pack housing 310 by an adhesive member such as an adhesive.

The first bolt 230 may fasten the frame 120 of the cell assembly 100 to the mounting block 210. The first bolt 230 may include a head part seated on the frame 120 of the cell assembly 100, and a body part inserted into a through-hole of the frame 120 of the cell assembly 100. The first bolt 230 may be inserted into a through-hole provided in the frame 120 of the cell assembly 100, and an end part 231 of the first bolt 230 may be screw-fastened to the mounting block 210. The mounting block 210 may include a hole for accommodating the end part 231 of the first bolt 230, and a surface of the mounting block 210 defining the hole of the mounting block 210 may be provided with threads engaging with threads provided on an outer circumferential surface of the first bolt 230. The frame 120 of the cell assembly 100 may be fixed to the pack housing 310 via the mounting block 210 as a medium, and the first bolt 230 does not physically contact the pack housing 310 and may be spaced apart from the pack housing 310. Since the first bolt 230 is not directly connected to the pack housing 310, it is possible to prevent the frame 120 of the cell assembly 100 from being electrically connected to the pack housing 310 through the first bolt 230.

In exemplary aspects, the mounting block 210 may be provided between the end frame 123 of the cell assembly 100 and the pack housing 310. The end frame 123 of the cell assembly 100 may be seated on the mounting block 210, and the first bolt 230 may fasten the end frame 123 of the cell assembly 100 to the mounting block 210 coupled to the pack housing 310. The first bolt 230 may be inserted into a through-hole 1231 provided in the end frame 123 of the cell assembly 100, and the end part 231 of the first bolt 230 may be screw-fastened to the mounting block 210.

The mounting block 210 may include a core block 211 and an insulation layer 213.

The core block 211 may include a hole for accommodating the end part 231 of the first bolt 230, and may be screw-fastened to the end part 231 of the first bolt 230. The core block 211 may be formed of a metal such as aluminum or steel.

The insulation layer 213 may extend along and cover the outer surface of the core block 211. The insulation layer 213 may be in direct contact with the pack housing 310 and the frame 120 of the cell assembly 100. The insulation layer 213 may cover the core block 211 such that the core block 211 does not contact the pack housing 310 and the frame 120 of the cell assembly 100.

The insulation layer 213 may be configured to electrically insulate the pack housing 310 from the frame 120 of the cell assembly 100 and the first bolt 230. The insulation layer 213 may be electrically non-conductive. The insulation layer 213 may include insulating plastic, insulating ceramic, an oxide thin film formed through anodizing treatment, or a combination thereof.

In a cell assembly according to a comparative example, when a thermal event such as ignition or thermal runaway of a battery cell occurs, the insulating part of the frame of the cell assembly is damaged, and the frame of the cell assembly becomes electrically connected to the pack housing, resulting in electrical short circuits and arcing. In particular, in the case of a structure in which the frame of the cell assembly is directly fastened to the pack housing through a bolt, the frame of the cell assembly is electrically connected to the pack housing through the bolt, making electrical short circuits and arcing prone to occur. The electrical short circuits and arcing may accelerate heat propagation between cell assemblies and may cause simultaneous thermal runaway of cell assemblies.

According to the exemplary aspects, since the electrical insulation between the pack housing 310 and the frame 120 of the cell assembly 100 can be maintained by the insulation layer 213 of the mounting block 210, the occurrence of electrical short circuits and arcing caused by the electrical connection of the frame 120 of the cell assembly 100 to the pack housing 310 can be suppressed. Since heat propagation between the cell assemblies 100 and simultaneous thermal runaway of the cell assemblies 100, which are caused by the electrical short circuits and arcing between the frame 120 of the cell assembly 100 and the pack housing 310, can be suppressed, the safety and reliability of the battery pack 10 can be improved.

According to the exemplary aspects, the mounting block 210 is coupled to the pack housing 310, and the frame 120 of the cell assembly 100 may be bolt-fastened to the mounting block 210. At this time, the frame 120 of the cell assembly 100 is fixed to the pack housing 310 through the mounting block 210, and the first bolt 230 for fastening the cell assembly 100 and the mounting block 210 is spaced apart from the pack housing 310. Therefore, it is possible to prevent the frame 120 of the cell assembly 100 from being electrically connected to the pack housing 310 through the first bolt 230.

### (Second aspect)

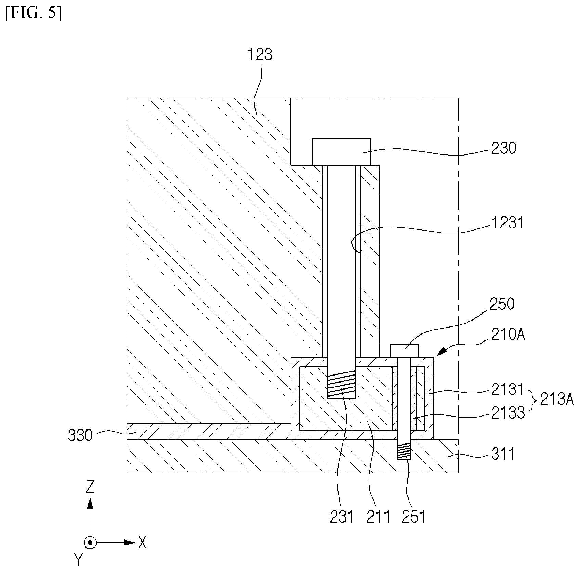

FIG. 5 is a cross-sectional view illustrating a state in which the cell assembly 100 provided in the battery pack according to exemplary aspects is mounted on the pack housing 310.

Referring to FIG. 5 together with FIGS. 1 to 3, the mounting block 210A may be bolt-fastened to the pack housing 310. A second bolt 250 may be inserted into a through-hole provided in the mounting block 210A, and an end part 251 of the second bolt 250 may be screw-fastened to the pack housing 310. The second bolt 250 may include a head part seated on the mounting block 210A, and a body part inserted into the through-hole of the mounting block 210A. The pack housing 310 may include a hole for accommodating the end part 251 of the second bolt 250. The mounting block 210A may be fixed to the pack housing 310 by engagement of threads provided on an outer circumferential surface of the end part 251 of the second bolt 250 with threads provided on a surface of the pack housing 310 defining the hole of the pack housing 310. When the frame 120 of the cell assembly 100 is fastened to the mounting block 210A by the first bolt 230 and the mounting block 210A is fastened to the pack housing 310 by the second bolt 250, the frame 120 of the cell assembly 100 may be fixed to the pack housing 310.
The insulation layer 213A may electrically insulate the second bolt 250 from the core block 211 and the first bolt 230. The insulation layer 213A may include an outer insulation layer 2131 extending along the outer surface of the core block 211, and an inner insulation layer 2133 extending along the through-hole of the core block 211 into which the second bolt 250 is inserted. The outer insulation layer 2131 may be in direct contact with the frame 120 of the cell assembly 100 and the pack housing 310, and may be interposed between the core block 211 and the frame 120 of the cell assembly 100 and between the core block 211 and the pack housing 310. The inner insulation layer 2133 may continuously extend along a surface of the core block 211 defining the through-hole of the core block 211 into which the second bolt 250 is inserted. The inner insulation layer 2133 may be interposed between the second bolt 250 and the core block 211 to space the second bolt 250 apart from the core block 211, and may electrically insulate between the second bolt 250 and the core block 211. Since the second bolt 250 is electrically insulated from the core block 211 by the inner insulation layer 2133 and the outer insulation layer 2131, the second bolt 250 may be electrically insulated from the first bolt 230 and the frame 120.

### (Third aspect)

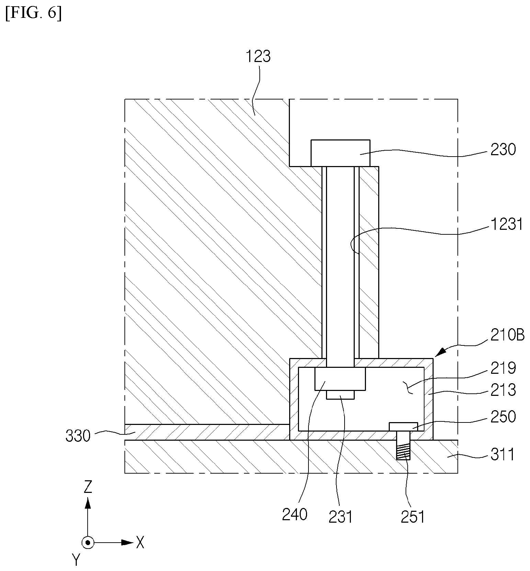

FIG. 6 is a cross-sectional view illustrating a state in which the cell assembly 100 provided in the battery pack according to exemplary aspects is mounted on the pack housing 310.

Referring to FIG. 6 together with FIGS. 1 to 3, the mounting block 210B may include a hollow part 219. The hollow part 219 may extend in the second direction between both ends of the mounting block 210B in the second horizontal direction (e.g., the Y-axis direction).

The end part 231 of the first bolt 230 may be accommodated in the hollow part 219 of the mounting block 210B, and a nut 240 may be screw-coupled to the end part 231 of the first bolt 230 accommodated in the hollow part 219 of the mounting block 210B. The nut 240 may be fastened to the first bolt 230 by engagement of threads provided on an inner circumferential surface of the nut 240 with threads provided on an outer circumferential surface of the first bolt 230. When the nut 240 is coupled to the end part 231 of the first bolt 230, the frame 120 of the cell assembly 100 may be fixed to the mounting block 210B. The hollow part 219 of the mounting block 210B may be defined by a surface of the insulation layer 213. In exemplary aspects, the mounting block 210B may be formed entirely of an insulating material.

The mounting block 210B may be fastened to the pack housing 310 by a second bolt. The second bolt 250 may include a head part accommodated in the hollow part 219 of the mounting block 210B, and a body part inserted into a hole of the mounting block 210B and a hole of the pack housing 310. The mounting block 210B may be fixed to the pack housing 310 by engagement of threads provided on an outer circumferential surface of the end part 251 of the second bolt 250 with threads provided on a surface of the pack housing 310 defining the hole of the pack housing 310. When the frame 120 of the cell assembly 100 is fastened to the mounting block 210B by the first bolt 230 and the mounting block 210B is fastened to the pack housing 310 by the second bolt 250, the frame 120 of the cell assembly 100 may be fixed to the pack housing 310.

The present disclosure has been described in detail above with reference to the drawings and aspects. However, the configurations described in the drawings or aspects of the present specification are merely one aspect of the present disclosure and do not represent all of the technical ideas of the present disclosure. Therefore, it should be understood that various equivalents and modifications may be made to the present disclosure at the time of filing this application.

### [Description of Reference Numerals]

10: BATTERY PACK
100: CELL ASSEMBLY
110: CELL BLOCK
111: BATTERY CELL
120: FRAME
121: CENTER FRAME
123: END FRAME
210, 210A, 210B: MOUNTING BLOCK
211: CORE BLOCK
213, 213A: INSULATION LAYER
219: HOLLOW PART
230: FIRST BOLT
240: NUT
250: SECOND BOLT
310: PACK HOUSING
330: ADHESIVE LAYER

## Claims

1. A battery pack comprising:
a pack housing;
a cell assembly comprising a frame provided on the pack housing and battery cells accommodated in the frame;
a mounting block provided between the frame and the pack housing; and
a first bolt fastening the frame to the mounting block and spaced apart from the pack housing, wherein
the mounting block comprises an insulation layer provided at a portion in contact with the frame and a portion in contact with the pack housing.

2. The battery pack of claim 1, wherein
the mounting block further comprises a core block, and
the insulation layer extends along an outer surface of the core block.

3. The battery pack of claim 2, wherein
the first bolt is fastened to the core block.

4. The battery pack of claim 1, wherein
the insulation layer is configured to electrically insulate the pack housing from the frame and the first bolt.

5. The battery pack of claim 1, further comprising:
a second bolt fastening the mounting block to the pack housing.

6. The battery pack of claim 5, wherein
the mounting block further comprises a core block to which the first bolt is fastened, and
the second bolt is spaced apart from the core block with the insulation layer interposed therebetween.

7. The battery pack of claim 5, wherein
the mounting block further comprises a core block to which the first bolt is fastened, and
the insulation layer comprises:
an outer insulation layer extending along an outer surface of the core block and in contact with the frame and the pack housing; and
an inner insulation layer extending along a hole of the core block into which the second bolt is inserted.

8. The battery pack of claim 7, wherein
the insulation layer is configured to electrically insulate the second bolt from the core block and the first bolt.

9. The battery pack of claim 1, wherein
the mounting block comprises a hollow part, and
an end of the first bolt is accommodated in the hollow part of the mounting block.

10. The battery pack of claim 9, further comprising:
a nut coupled to the end of the first bolt accommodated in the hollow part of the mounting block.

11. The battery pack of claim 9, further comprising:
a second bolt fastening the mounting block to the pack housing, wherein
a part of the second bolt is accommodated in the hollow part of the mounting block.

12. The battery pack of claim 1, wherein
the mounting block comprises a hollow part accommodating an end of the first bolt, and
the battery pack further comprises:
a nut coupled to the end of the first bolt accommodated in the hollow part of the mounting block; and
a second bolt fastening the mounting block to the pack housing and having a portion accommodated in the hollow part of the mounting block.
